# EUROPEAN PATENT APPLICATION

(11) **EP 0 644 359 A1**
(43) Date of publication of application: **22.03.1995**
(21) Application number: 94306681.1
(22) Date of filing: 12.09.1994
(51) Int. Cl.: F16H 57/04

(54) **Lubrication system for vehicle transmission**

(30) Priority: 17.09.1993 US 122154
(71) Applicant: DANA CORPORATION, Toledo, OH 43615 (US)
(72) Inventor: Jester, Terry L., Perrysburg, Ohio 43551 (US)
(74) Representative: Cheyne, John Robert Alexander Mackenzie

(57) **Abstract**

A system for lubricating the gears and bearings in a vehicle transmission (10) includes a fluid pump (60) mounted on the exterior of the transmission housing (14) and connected to a rotatably driven shaft contained therein. When operated, the pump (60) draws lubricant from a sump defined in the lower portion of the transmission housing (14). In a first embodiment, the lubricant from the pump (60) is delivered through a fluid conduit (65) to a single internal lubricant conduit (70) disposed within the transmission housing (14). The internal lubricant conduit (70) includes first (72) and second (74) distribution legs having respective pluralities of apertures (72a, 74a) formed therein. The apertures (72a, 74a) are located directly above the region where the various gears contained within the transmission (10) mesh. Lubricant sprayed from the apertures (72a, 74a) falls from the meshing gears under the influence of gravity and is collected in the sump defined in the lower portion of the transmission housing (14) so as to be recirculated. In a second embodiment, the lubricant from the pump (80) is delivered through a fluid conduit (86) to a pair of internal lubricant conduits (92, 93) disposed within the transmission housing (14). Each of the internal lubricant conduits (92, 93) includes respective pluralities of apertures (92a, 93a) formed therein located directly above the region where the various gears contained within the transmission (10) mesh.

## Description

### BACKGROUND OF THE INVENTION

This invention relates in general to vehicle transmissions and in particular to an improved system for lubricating the gears and bearings in a vehicle transmission.

In most vehicles, a transmission is provided in the drive train between the engine and the driven wheels. As is well known, the transmission includes a housing containing an input shaft, an output shaft, and a plurality of meshing gears which are selectively connected between the input shaft and the output shaft. The meshing gears contained within the transmission housing are of varying size so as to provide a plurality of speed reduction gear ratios between the input shaft and the output shaft. By appropriate selection of these meshing gears, a desired speed reduction gear ratio can be obtained between the input shaft and the output shaft. As a result, acceleration and deceleration of the vehicle can be accomplished in a smooth and efficient manner.

Typically, this gear ratio selection is accomplished by moving one or more control members provided within the transmission. Movement of the control member causes certain ones of the meshing gears to be connected between the input shaft and the output shaft so as to provide the desired gear ratio therebetween. In a manual transmission, movement of the control member is accomplished by manual exertion of the vehicle driver, such as through a shift lever. In an automatic transmission, movement of the control member is accomplished by a pneumatic or hydraulic actuator in response to predetermined operating conditions.

In both manual and automatic transmissions, it is known to provide lubricant within the transmission for minimizing the adverse effects of friction caused by the meshing gears contained therein. In the past, the lower portion of the housing of the transmission functioned as a sump for the lubricant. Portions of the meshing gears of the transmission were partially submerged in the lubricant. Thus, when such gears were rotated during use, the lubricant was carried thereon or splashed into the meshing teeth thereof so as provide lubrication.

Although this sump type of lubrication system has functioned successfully in the past, it has been found to have several drawbacks. First, a certain amount of clearance space must be provided between the lower portions of the meshing gears and the housing of the transmission. Consequently, a relatively large amount of lubricant is required to fill the sump of the transmission housing to a sufficiently high level to insure that all of the meshing gears are at least partially submerged therein. This relatively large amount of lubricant adds unnecessary weight and expense to the transmission.

Second, transmissions are often operated at an angle which is inclined relative to the horizontal. In some instances, the transmission is installed within the vehicle at an angle which is inclined relative to the horizontal. In other instances, the transmission is installed horizontally within to the vehicle, but the vehicle is operated on an inclined surface, such as when climbing a hill. In either event, because gravity maintains the level of the lubricant horizontal, some of the meshing gears in the transmission are often deeply submerged in the lubricant during operation while others are only partially submerged. The continuous rotation of the deeply submerged gears causes unnecessary churning of the lubricant in the sump, which results in a loss of efficiency and increased lubricant temperature.

The problem of increased lubricant temperature has been addressed in the past by mounting a pump on the exterior of the transmission. The pump is connected to a rotating shaft contained within the transmission so as to be driven thereby. The pump circulates the lubricant out of the sump, through a heat exchanger typically provided at the front of the vehicle, and back into the sump. Unfortunately, this relatively lengthy and complicated fluid path also resulted in loss of efficiency. Thus, it would be desirable to provide an improved system for lubricating the gears and bearings in a vehicle transmission which addresses these drawbacks.

### SUMMARY OF THE INVENTION

This invention relates to an improved system for lubricating the gears and bearings in a vehicle transmission. The lubricant distribution system includes a fluid pump which is mounted on the exterior of the transmission housing and is connected to a rotatably driven shaft contained therein so as to be rotatably driven. When so operated, the pump draws lubricant from a sump defined in the lower portion of the transmission housing. In a first embodiment of the invention, the lubricant from the pump is delivered through a fluid conduit to a single internal lubricant conduit disposed within the transmission housing. The internal lubricant conduit includes first and second distribution legs having respective pluralities of apertures formed therein. The apertures are located directly above the region where the various gears contained within the transmission mesh. Lubricant sprayed from the apertures falls from the meshing gears under the influence of gravity and is collected in the sump defined in the lower portion of the transmission housing so as to be recirculated. In a second embodiment of the invention, the lubricant from the pump is delivered through a fluid conduit to a pair of internal lubricant conduits disposed within the transmission housing. Each of the internal lubricant conduits includes respective pluralities of apertures formed therein located directly above the region where the various gears contained within the transmission mesh.

Various objects and advantages of this invention will become apparent to those skilled in the art from the following detailed description of the preferred embodiments, when read in light of the accompanying drawings.

### BRIEF DESCRIPTION OF THE DRAWINGS

Fig. 1 is a top plan view of a vehicle transmission including a first embodiment of a lubrication system in accordance with this invention.

Fig. 2 is a side elevational view, partially in cross section, of the transmission and first lubrication system taken along line 2-2 of Fig. 1.

Fig. 3 is sectional elevational view of the transmission housing and the internal lubricant conduit taken along line 3-3 of Fig. 1, wherein the main shaft, the countershafts, and the associated gears of the transmission are only illustrated schematically for clarity.

Fig. 4 is a perspective view of the internal lubricant conduit illustrated in Figs. 1 through 3.

Fig. 5 is a top plan view of a vehicle transmission including a second embodiment of a lubrication system in accordance with this invention.

Fig. 6 is a side elevational view, partially in cross section, of the transmission and second lubrication system taken along line 6-6 of Fig. 5.

Fig. 7 is a perspective view of the pair of internal lubricant conduits illustrated in Figs. 5 and 6.

### DETAILED DESCRIPTION OF THE PREFERRED EMBODIMENTS

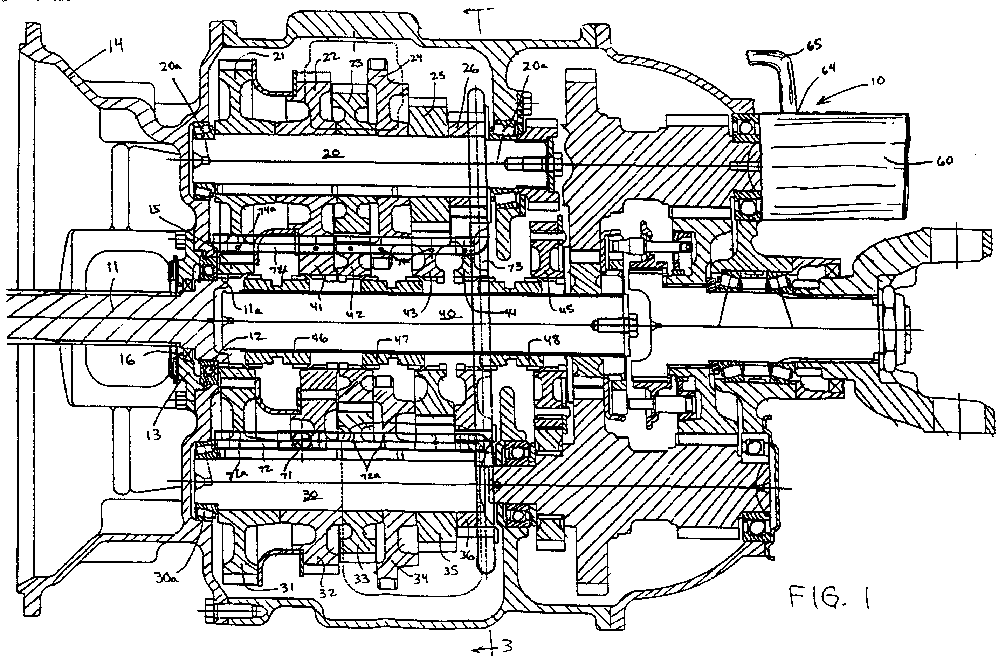

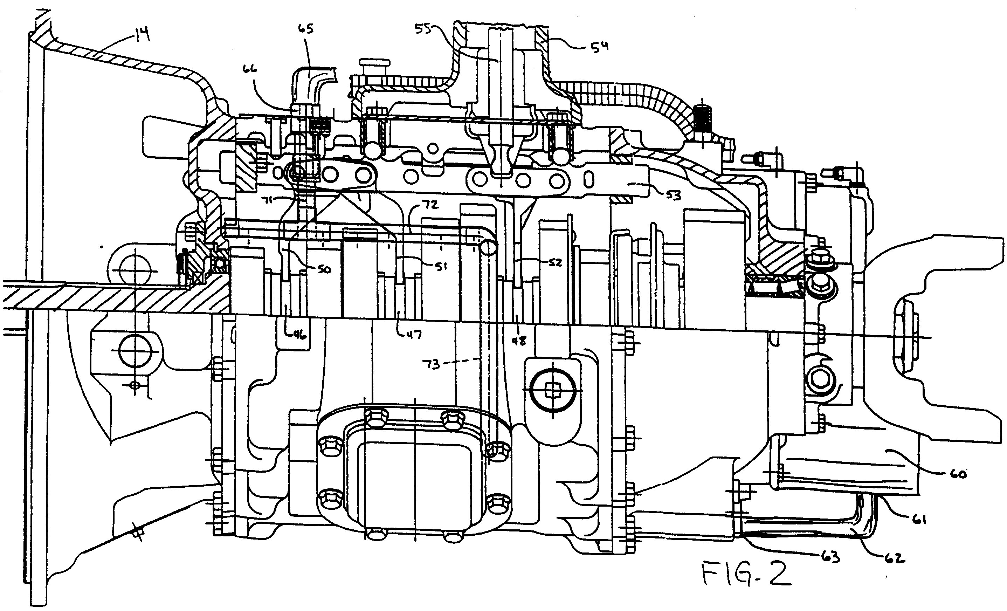

Referring now to the drawings, there is illustrated in Figs. 1 and 2 a twin countershaft compound transmission, indicated generally at 10. The transmission 10 is generally conventional in the art and is intended to be representative of any known vehicle transmission structure, either manually or automatically shifted. As a result, only a brief overview of the structure and operation of the illustrated transmission 10 is necessary for a complete understanding of the lubrication system of this invention.

As best shown in Fig. 1, the transmission 10 includes an input shaft 11 which is adapted to be rotatably driven, such as by a conventional internal combustion or diesel engine (not shown). If desired, a conventional clutch (not shown) may be connected between the vehicle engine and the input shaft 11 of the transmission 10. The input shaft 11 is supported for rotation by a bearing 12 mounted in an opening formed through a bearing cap 13 secured to a forward end of a housing 14 for the transmission 10. The axial inner end of the input shaft 11 is formed having an integral toothed gear portion 11a which meshes with a plurality of radially inwardly extending teeth formed on an annular input drive gear 15. A seal 16 is provided about the input shaft 11 for preventing lubricant contained within the transmission 10 from escaping, as will be described in detail below.

Within the housing 14 of the transmission, a first countershaft 20 is rotatably supported on a pair of tapered roller bearings 20a. A plurality of gears 21, 22, 23, 24, 25, and 26 are splined onto the first countershaft 20 for rotation therewith. The input drive gear 15 further includes a plurality of radially outwardly extending teeth which mesh with a corresponding plurality of teeth formed on the first one 21 one of the first countershaft gears. Thus, when the input shaft 11 is rotated, the input drive gear 15, the first countershaft 20, and all of the first countershaft gears 21 through 26 are rotated therewith. Similarly, a second countershaft 30 is rotatably supported within the transmission housing 14 on a pair of tapered roller bearings 30a. A plurality of gears 31, 32, 33, 34, 35, and 36 are splined onto the second countershaft 30 for rotation therewith. The radially outwardly extending teeth of the input drive gear 15 also mesh with a corresponding plurality of teeth formed on the first one 31 of the second countershaft gears. Thus, when the input shaft 11 is rotated, the input drive gear 15, the second countershaft 30, and all of the second countershaft gears 31 through 36 are also rotated therewith.

A splined main shaft 40 is also provided within the housing 14 of the transmission 10. A plurality of annular main shaft gears 41, 42, 43, and 44 are disposed co-axially about the main shaft 40. The first main shaft gear 41 meshes with both the second one 22 of the first countershaft gears and the second one 32 of the second countershaft gears. Similarly, the remaining main shaft gears 42, 43, 44 mesh with the corresponding ones of the first countershaft gears 23, 25, 26 and the second countershaft gears 33, 35, and 36. An annular output drive gear 45 is also disposed co-axially about the main shaft 40.

A plurality of hollow cylindrical clutch collars 46, 47, and 48 are splined onto the main shaft 40 for rotation therewith. Each of the clutch collars 46, 47, and 48 is illustrated in Fig. 1 in a neutral or non-gear engaging position. However, each of the clutch collars 46, 47, and 48 is axially movable relative to the main shaft 40 between first and second gear engaging positions. For example, the first clutch collar 46 may be moved axially forwardly (toward the left when viewing Fig. 1) so as to connect the input drive gear 15 to the main shaft 40 for direct drive operation. The first clutch collar 46 may alternatively be moved axially rearwardly (toward the right when viewing Fig. 1) so as to connect the first main shaft gear 41 to the main shaft 40 for gear reduction operation. The other clutch collars 47 and 48 may be moved in a similar way to control the operation of the transmission 10 in a known manner.

As best shown in Fig. 2, each of the clutch collars 46, 47, and 48 is engaged by a respective shift fork 50, 51, and 52. The shift forks 50, 51, and 52 are mounted on respective shift rails (only one is illustrated at 53) for axial movement therewith. In the illustrated embodiment, a shift tower 54 containing a manually operable shift lever 55 is provided for selecting one of the shift rails 53 for movement and for effecting such axial movement. It will be appreciated, however, that such selecting and shifting actions may alternatively be performed by any automatic or automated manual apparatus.

As mentioned above, the illustrated transmission 10 is a compound transmission. The components of the transmission 10 thus far described constitute the main section of the transmission, which provides a predetermined number of speed reduction gear ratios. The transmission 10 further includes a conventional auxiliary section, which is located rearwardly (toward the right when viewing Fig. 1) of the main section. The auxiliary section also provides a predetermined number of speed reduction gear ratios in a known manner. The total number of speed reduction gear ratios available from the transmission 10 as a whole, therefore, is equal to the product of the gear ratios available from the main section and the gear ratios available from the auxiliary section. Although the illustrated transmission 10 is a compound transmission, it will be appreciated that any conventional single stage transmission may be used with the lubrication system of this invention. The structure of the transmission thus far described is conventional in the art.

The transmission 10 further includes a system for distributing lubricant to the various meshing gears contained therein. Referring to Figs. 1 through 4, a first embodiment of the lubricant distribution system includes a fluid pump 60 which is mounted on the exterior of the housing 14 of the transmission 10. The pump 60 is conventional in the art and is connected to any rotatably drive shaft contained in the transmission 10 so as to be rotatably driven thereby. The pump 60 includes an inlet port 61 which is connected by a first fluid conduit 62 to a drain port 63 formed in the lower portion of the housing 14 of the transmission 10. The drain port 63 includes a conventional fluid-tight fitting which extends through the transmission housing 14. As a result, lubricant (not shown) which collects in the lower portion housing 14 under the influence of gravity can flow freely into the first fluid conduit 62 and be drawn into the pump 60 when operated.

The pump 60 of the lubricant distribution system further includes an outlet port 64 which is connected by a second fluid conduit 65 to a lubricant port 66 formed in the upper portion of the housing 14 of the transmission 10. The lubricant port 66 also includes a conventional fluid-tight fitting which extends through the transmission housing 14. Thus, when the transmission 10 is operated, the pump 60 draws lubricant from the sump defined in the lower portion of the transmission housing 14 through the drain port 61 and the first fluid conduit 62 to the pump 60, and through the second fluid conduit 65 and the lubricant port 66 into the upper portion of the transmission housing 14.

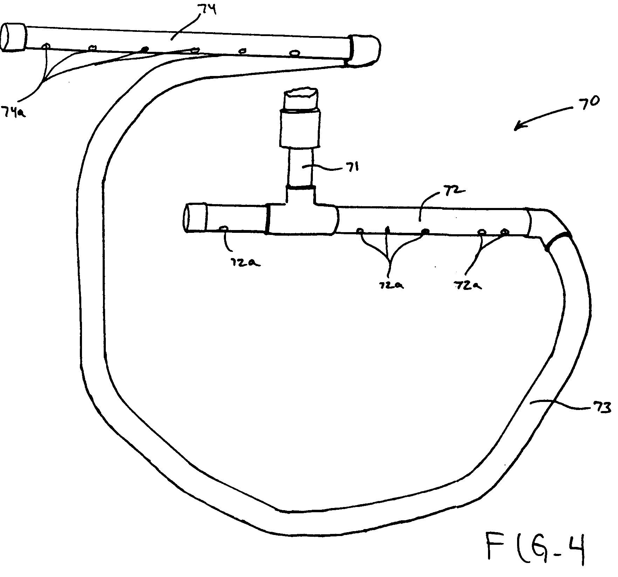

Within the transmission housing 14, the first lubricant distribution system includes a single internal lubricant conduit, indicated generally at 70 in Fig. 4. The internal lubricant conduit 70 includes an upper entry leg 71, the upper end of which communicates with the lubricant port 66 formed through transmission housing 14. The lower end of the upper entry leg 71 of the internal lubricant conduit 70 communicates with a first distribution leg 72 which extends co-axially with the second countershaft 30 and the main shaft 40. As best shown in Fig. 1, the first distribution leg 72 of the internal lubricant conduit 70 is disposed above the region where the gears 31, 32, 33, 34, 35, and 36 mesh with the gears 15, 41, 42, 43, 44, and 45, respectively. A plurality of apertures 72a are formed through the lower side of the first distribution leg 72 of the internal lubricant conduit 70. These apertures 72a are located directly above the region where each of the above-identified gears mesh.

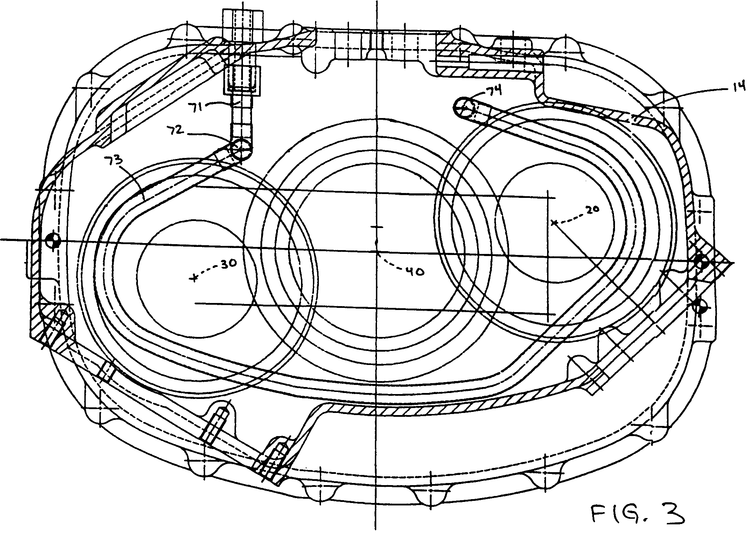

One end (the left end when viewing Fig. 1) of the first distribution leg 72 of the internal lubricant conduit 70 is closed. The other end (the right end when viewing Fig. 1) of the first distribution leg 72 communicates with one end of a curved intermediate leg 73 which, as best shown in Fig. 3, extends about the inner surface of the transmission housing 14. The other end of the intermediate leg 73 communicates with a second distribution leg 74. The second distribution leg 74 extends co-axially with the first countershaft 20 and the main shaft 40. As best shown in Fig. 1, the second distribution leg 74 of the internal lubricant conduit 70 is disposed above the region where the gears 21, 22, 23, 24, 25, and 26 mesh with the gears 15, 41, 42, 43, 44, and 45, respectively. As with the first distribution leg 72, a plurality of apertures 74a are formed through the lower side of the second distribution leg 74 of the internal lubricant conduit 70. These apertures 74a are located directly above the region where each of the above-identified gears mesh.

In operation, the shaft driving the pump 60 is rotated whenever the transmission 10 is operated. Such rotation causes the pump 60 to draw lubricant from the sump defined in the lower portion of the transmission housing 14 as described above. Such lubricant is then sprayed from the apertures 72a and 74a of the first and second distribution legs 72 and 74, respectively, of the internal lubricant conduit 70 onto the regions where the above-identified gears mesh. Lubricant is also sprayed onto the bearing 12 which supports the input shaft 11 for rotation within the bearing cap 13. The sprayed lubricant falls from the meshing gears under the influence of gravity and is collected in the sump defined in the lower portion of the transmission housing 14. Thus, it can be seen that a path is established for recirculating such lubricant throughout the transmission 10 for continuous use.

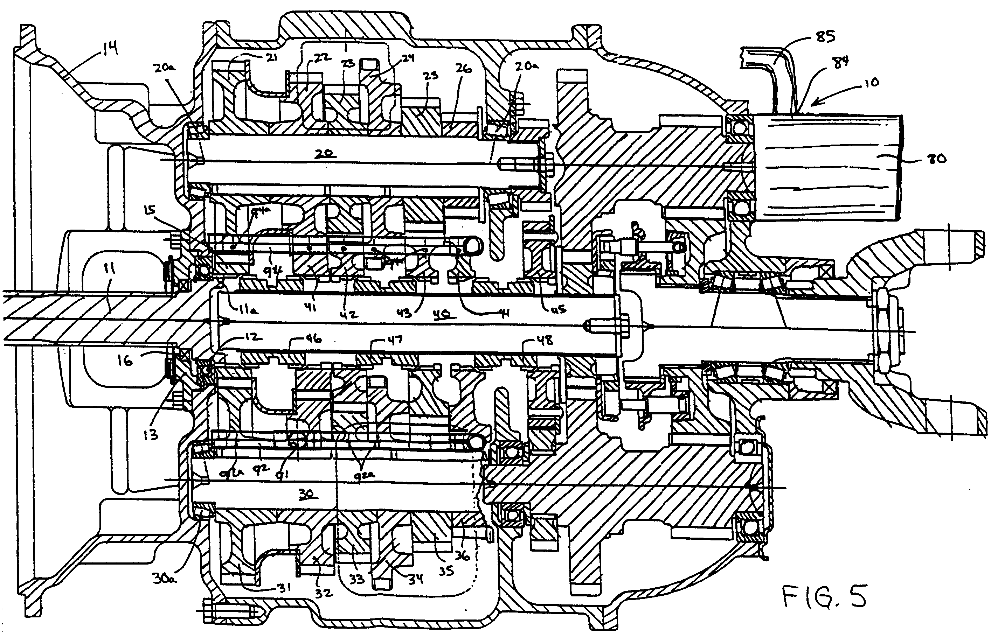

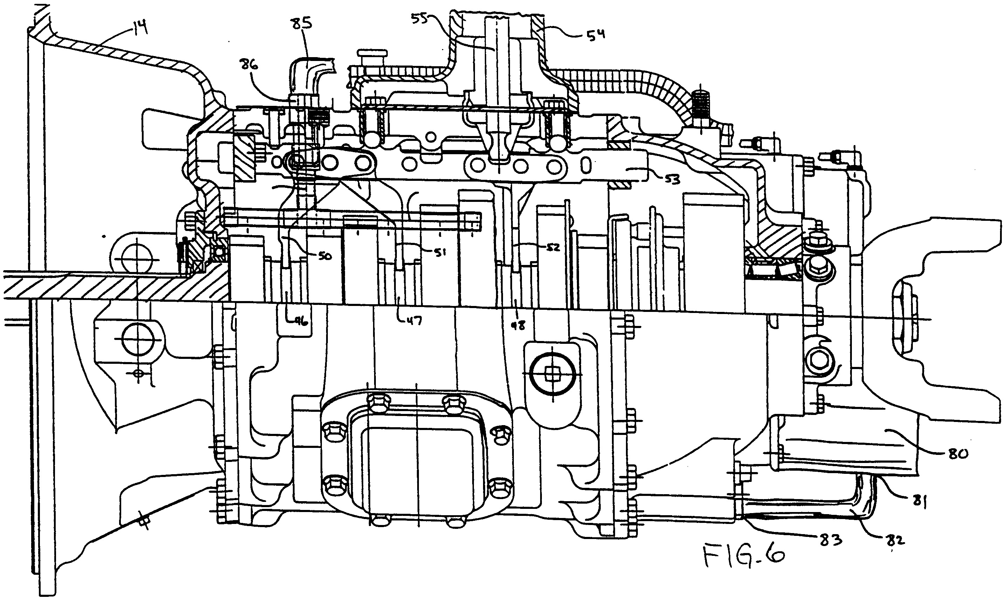

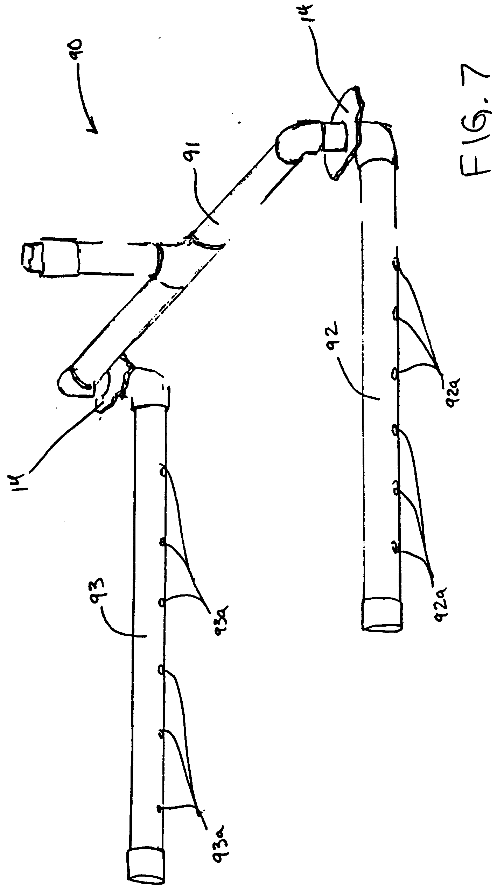

Referring now to Figs. 5 through 7, a second embodiment of the lubricant distribution system is illustrated in connection with the above-described transmission 10. The second lubricant distribution system includes a fluid pump 80 which is mounted on the housing 14 of the transmission 10. The pump 80 is conventional in the art and is connected to any rotatably drive shaft contained within the transmission 10 so as to be rotatably driven thereby. The pump 80 includes an inlet port 81 which is connected by a first fluid conduit 82 to a drain port 83 formed in the lower portion of the housing 14 of the transmission 10. The drain port 83 includes a conventional fluid-tight fitting which extends through the transmission housing 14 such that lubricant (not shown) which collects in the lower portion of the housing 14 as a result of gravity can flow freely into the first fluid conduit 82 and be drawn into the pump 80 when operated.

The pump 80 of the second lubricant distribution system further includes an outlet port 85 which is connected by a second fluid conduit 86 to a alternative embodiment of a lubricant conduit, indicated generally at 90. The alternative lubricant conduit 90 includes a T-shaped leg 91 which is located adjacent to the exterior surface of the housing 14 of the transmission 10. The T-shaped leg 91 provides communication between the second fluid conduit 86 and a pair of distribution legs 92 and 93. The first and second distribution legs 92 and 93 are angled so as to extend downwardly through respectively fluid tight fittings provided in lubricant ports formed through the upper portion of the transmission housing 14. Within the transmission housing 14, the first and second distribution legs 92 and 93 are again angled so as to extend forwardly co-axial with the first and second countershafts 20 and 30, respectively, and with the main shaft 40. Similar to that described above, the first and second distribution legs 92 and 93 have respective pluralities of apertures 92a and 93a formed through the lower sides thereof which are located directly above the region where the various gears contained within the transmission 10 mesh.

In operation, the shaft rotates whenever the transmission 10 is operated, causing the pump 80 to draw lubricant from the sump defined in the lower portion of the transmission housing 14 as described above. Such lubricant is then sprayed from the apertures 92a and 93a of the first and second distribution legs 92 and 93, respectively, of the alternative lubricant conduit 90 onto the regions where the above-identified gears mesh. Lubricant is also sprayed onto the bearing 12 which supports the input shaft 11 for rotation within the bearing cap 13. The sprayed lubricant falls from the meshing gears under the influence of gravity and is collected in the sump defined in the lower portion of the transmission housing 14.

In accordance with the provisions of the patent statutes, the principle and mode of operation of this invention have been explained and illustrated in its preferred embodiments. However, it must be understood that this invention may be practiced otherwise than as specifically explained and illustrated without departing from its spirit or scope.

## Claims

1. A transmission comprising:
a housing including an inner surface defining a sump for collecting lubricant and an outer surface;
an input shaft;
an output shaft;
a plurality of gears selectively connectable between said input shaft and said output shaft for providing a plurality of gear ratios therebetween;
a lubricant distribution conduit disposed within said housing and having at least one aperture formed therein;
a pump mounted on said outer surface; and
means for connecting said sump to said pump and said pump to said lubricant distribution conduit such that operation of said pump draws lubricant from said sump and delivers such lubricant to lubricant distribution conduit and said plurality of gears.

2. The transmission defined in Claim 1 wherein said aperture is disposed adjacent to some of said plurality of gears such that lubricant is sprayed from said aperture thereon.

3. The transmission defined in Claim 1 wherein said lubrication distribution conduit has a plurality of apertures formed therein.

4. The transmission defined in claim 3 wherein each of said apertures is disposed adjacent to some of said plurality of gears such that lubricant is sprayed from said aperture thereon.

5. The transmission defined in Claim 1 wherein said means for providing fluid communication includes an entry leg extending through said housing for providing fluid communication between said pump and said fluid distribution conduit.

6. The transmission defined in Claim 1 wherein some of said plurality of gears are mounted on a shaft disposed within said housing, said lubrication distribution conduit extending generally parallel to said shaft.

7. The transmission defined in Claim 1 wherein said lubricant distribution conduit includes a first distribution leg and a second distribution leg, each of said first and second distribution legs having an aperture formed therein.

8. The transmission defined in Claim 7 wherein said lubrication distribution conduit further includes an intermediate leg providing fluid communication between said first distribution leg and said second distribution leg.

9. The transmission defined in Claim 7 wherein some of said plurality of gears are mounted on a first countershaft disposed within said housing and some of said plurality of gears are mounted on a second countershaft disposed within said housing, said first distribution leg being disposed adjacent to said first countershaft, said second distribution leg being disposed adjacent to said second countershaft.

10. The transmission defined in Claim 9 wherein said first distribution leg extends generally parallel to said first countershaft and said second distribution leg extends generally parallel to said second countershaft.

11. The transmission defined in Claim 1 wherein said housing includes a drain port and a lubricant port formed therein, said pump includes an inlet port and an outlet port, and said means for providing fluid communication includes a first fluid conduit providing fluid communication between said drain port and said inlet port and a second fluid conduit providing fluid communication between said outlet port and said lubricant port.

12. The transmission defined in Claim 11 wherein said drain port includes a first fluid-tight fitting which extends through said housing to provide fluid communication between said sump and said first fluid conduit, and wherein said lubricant port includes a second fluid-tight fitting which extends through said housing to provide fluid communication between said second fluid conduit and said lubricant distribution conduit.

13. The transmission defined in Claim 1 wherein said pump is connected to be driven by said transmission to supply lubricant from said sump to said lubrication distribution conduit.

14. The transmission defined in Claim 1 wherein said pump is mounted on said transmission.

15. A transmission comprising:
a housing defining a sump for collecting lubricant;
an input shaft extending within said housing;
an output shaft extending within said housing;
a plurality of gears disposed within said housing and selectively connectable between said input shaft and said output shaft for providing a plurality of gear ratios therebetween;
a lubricant distribution conduit disposed within said housing and including a first distribution leg and a second distribution leg, each of said first and second distribution legs extending through said housing and having an aperture formed therein;
a pump mounted externally of said housing; and
means for providing fluid communication between said sump and said pump and between said pump and said lubricant distribution conduit such that operation of said pump draws lubricant from said sump and delivers such lubricant through said first and second distribution legs to some of said plurality of gears, said means for providing fluid communication including a fluid conduit connected to each of said first and second distribution legs at a location externally of said housing.

16. The transmission defined in Claim 15 wherein said means for providing fluid communication further includes a T-shaped fluid conduit having a first leg communicating with said first distribution leg, a second leg communicating with said second distribution leg, and a third leg communicating with said pump.
